# EUROPÄISCHE PATENTSCHRIFT

(11) **EP 2 681 171 B1**
(45) Veröffentlichungstag und Bekanntmachung des Hinweises auf die Patenterteilung: **01.05.2019**
(21) Anmeldenummer: 11718229.5
(22) Anmeldetag: 28.02.2011
(51) Int. Cl.: C04B 28/06, C04B 38/10

(54) **MINERALISCHE MEHRSCHICHTPLATTE UND VERFAHREN ZUR HERSTELLUNG**
MINERAL MULTI-LAYER PLATE AND METHOD FOR PRODUCTION
PLAQUE MULTICOUCHE MINÉRALE ET SON PROCÉDÉ DE PRODUCTION

(43) Veröffentlichungstag der Anmeldung: 08.01.2014
(73) Patentinhaber: Geolyth Mineral Technologie GmbH, 4050 Traun (AT)
(72) Erfinder: SCHMID, Michael, A-4893 Zell am Moos (AT)
(74) Vertreter: Burgstaller, Peter
(86) Internationale Anmeldenummer: PCT/AT2011/000098
(87) Internationale Veröffentlichungsnummer: WO 2012/116379

(56) Entgegenhaltungen:
- EP-A1- 0 924 175
- EP-A2- 0 353 062
- DE-C1- 10 155 140

## Beschreibung

Die Erfindung betrifft eine zwei unterschiedliche Schichten enthaltende Mehrschichtplatte sowie ein Verfahren zur Herstellung davon.

Die erfindungsgemäße Mehrschichtplatte ist vorteilhaft als Wärmedämmung an Gebäudewänden und Gebäudedecken anwendbar, insbesondere auch auf der Innenseite von Wänden.

Wärmedämmmaterialien haben zwangsweise eine geringe mechanische Festigkeit, da hoher Wärmedurchgangswiderstand eines Materials nur durch hohe Porosität erreichbar ist. Für die Wärmedämmung von Gebäudewänden verwendet man daher im Normalfall einen Schichtverbund aus zumindest einer dicken Schicht aus einem sehr gut wärmedämmenden Material und einer dünneren, mechanisch festeren Schicht, die keine besonders gute Wärmedämmwirkung zu haben braucht aber die mechanisch wenige feste Schicht gegen mechanische Einwirkung von außen schützt.

Wärmedämmmaterialien auf organischer Basis sind im Allgemeinen mit höherer Porosität (bedeutet bessere Wärmedämmung) und mit geringerem Herstellungsaufwand herstellbar als Wärmedämmmaterialien auf mineralischer Basis. Aus bauphysiologischen Gründen, insbesondere wegen der Diffusionsoffenheit, würde man aber eher Dämmstoffe auf mineralischer Basis (Porenbeton etc.) gegenüber Dämmstoffen auf organischer Basis (Kunststoffschäume ...) bevorzugen.

Die DE 10 2007 040 654 A1 schlägt als Wärmedämmung auf mineralischer Basis einen Verbund aus einer relativ dünnen, relativ dichten, diffusionsoffen, festen Kalziumsilikatplatte und einer dickeren Platte aus weniger dichtem und weniger festem mineralischem Dämmstoff vor, der dafür besser Wärme isoliert und ebenfalls diffusionsoffen ist, auszubilden. Als Dämmstoff sind dabei Porenbeton, Schaumbeton, Blähton, Bims oder Schaumglas genannt. Dabei soll die Kalziumsilikatplatte dem Raum im Gebäude zugewandt angeordnet sein und der Dämmstoff zwischen Kalziumsilikatplatte und Mauer. Als Verbindungsmethode wird vorgeschlagen die Dämmstoffschicht erst an der Mauer festzukleben und dann Kalziumsilikatplatten an der Dämmstoffschicht festzukleben, jeweils mit einem diffusionsoffenen Klebstoff. Alternativ dazu wird auch vorgeschlagen, die Kalziumsilikatplatten mittels Befestigungselementen, die die Dämmstoffschicht durchdringen, an der Mauer zu befestigen. Durch die Kombination unterschiedlicher Schichten werden die individuelle Vorteile der einzelnen Materialien (hohe Kapillarität, Wärmedämmung, niedriger Preis pro Volumen, Festigkeit) zur Geltung gebracht und individuelle Nachteile der einzelnen Materialien (geringe Festigkeit, hohe Kosten pro Volumen, geringe Oberflächentauglichkeit, zu hohe Wärmedurchlässigkeit, hoher Preis pro Volumen) in ihrer Auswirkung entschärft. Als nachteilig verbleiben aber der hohe erforderliche Aufwand für die Logistik der verschiedenen Einzelteile und der hohe Montageaufwand für das Anbringen der unterschiedlichen Schichten.

Die EP 0353062 A2 offenbart in Beispiel 9 eine Formulierung zum Herstellen einer Verbundplatte mit einer inneren poröseren (geschäumten) Schicht, welche an beiden Seiten von einer äußeren nicht porösen Schicht bedeckt ist, um die poröse Schicht zu schützen. Nachteilig ist die geringe Stabilität der porösen Schicht, bei vergleichsweise hoher Dichte der Schicht.

Von diesem Stand der Technik ausgehend liegt die der Erfindung zu Grunde liegende Aufgabe darin, eine als Wärmedämmung an der Innenseite von Gebäudewänden und Gebäudedecken verwendbare Mehrschichtplatte auf mineralischer Basis bereitzustellen, mit der eine bessere Wärmedämmwirkung erzielbar ist, die ebenso hohe Kapillarität, und ausreichend gute Festigkeit der Oberflächenschicht aufweist und die darüber hinaus mit weniger Aufwand herstellbar ist und bei Lieferung und Montage einfacher zu handhaben ist.

Erfindungsgemäß wird eine Mehrschichtplatte gemäß Anspruch 1 vorgeschlagen, also eine Mehrschichtplatte als Verbundplatte aus zwei unmittelbar aneinander stoffschlüssig haftenden mineralischen Schichten, wobei beide Schichten aus einer selbstaushärtenden Formulierung umfassend ein hydraulisch abbindendes Bindemittel und ein Sulfat gebildet sind, wobei eine Schicht bezogen auf die zweite Schicht eine höhere Porosität aufweist, und wobei das hydraulisch abbindende Bindemittel aus Sulfat-Aluminat-Zement gebildet ist, wobei der Sulfat-Aluminat-Zement in der Formulierung mit zumindest 60 Gewichtsprozenten insbesondere zumindest 70 Gewichtsprozent enthalten ist, wobei puzzolanisch abbindendes Bindemittel in Form von SiO2-Partikeln mit maximal 10 Gewichtsprozent in der Formulierung enthalten ist, wobei der Formulierung für die Schicht mit höherer Porosität eine Schaumkomponente zugefügt ist, wobei der Anteil der Schaumkomponente pro m³ Formulierung zwischen 30 kg/m³ und 70 kg/m³, insbesondere zwischen 40 kg/m³ und 60 kg/m³ beträgt, wobei die Formulierung für die Schicht mit niedrigerer Porosität nicht geschäumt ist, oder jener selbstaushärtenden Formulierung, durch welche die Schicht mit niedrigerer Porosität gebildet ist, pro Menge Formulierung 30 bis 50 Prozent jener Menge Schaumkomponente zugefügt sind, welche der Formulierung für die Schicht mit höherer Porosität pro Menge Formulierung zugefügt ist.

Für die Mischung aus hydraulisch abbindenden Bindemittel, puzzolanisch abbindenden Bindemittel und Sulfat wird des Weiteren kurz die Bezeichnung "Formulierung" gebraucht. Für den daraus unter Beigabe von Wasser anrührbaren, selbstaushärtenden Brei wird des Weiteren die Bezeichnung "Slurry" verwendet.

Das hydraulisch abbindende Bindemittel der Formulierung ist auf Basis eines Sulfat-Aluminat-Zements gebildet. Es enthält eine Sulfatkomponente und eine Aluminiumkomponente und ist in der Formulierung mit zumindest 50 Gewichtsprozenten enthalten.

Die erforderliche hohe Porosität der höher porösen Schicht der Mehrschichtplatte wird dadurch erzielt, dass dem Slurry, aus dem die Schicht zu bilden ist, eine Schaumkomponente beigemischt wird. So kann die wärmedämmende Schicht ohne Autoklavierung hergestellt werden, womit das Schäumverfahren einfach und damit auch kostengünstig abgewickelt werden kann.

Bevorzugt wird auch jenem Slurry, aus dem die weniger poröse Schicht gebildet wird, eine Schaumkomponente beigemischt, allerdings markant weniger als dem Slurry, aus dem die höher poröse Schicht gebildet wird. Indem auch die als mechanischer Schutz wirkende Schicht der Mehrschichtplatte porös ist, kann sie bei gleichem Gewicht dicker und besser wärmeisolierend ausgeführt werden, als eine kompakte Schicht. Es ergeben sich vor allem Vorteile bezüglich der mechanischen Festigkeit der Mehrschichtplatte.

Erfindungsgemäß wird weiters vorgeschlagen, die Mehrschichtplatte herzustellen, indem zwei mit unterschiedlich hohen Anteilen von Schaumkomponente vermischte Slurries zeitlich hintereinander übereinander in die gleiche Form gegossen werden, wobei bevorzugt erst der mit weniger Schaumkomponente vermischte - spezifisch schwerere - Slurry in die Form gegossen wird.

Um das Entstehen einer verlässlichen Verbindung zwischen den beiden Schichten in hoher Qualität sicherzustellen zu können, bedarf es keiner separaten verbindenden Zwischenschicht. Es brauchen nur die Slurries übereinander gelehrt zu werden. Es ist vorteilhaft aber nicht zwangsweise erforderlich, dass der dabei unten zu liegen kommende Slurry noch flüssig ist, wenn der obere Slurry darauf gelehrt wird.

Diese Verbindungsmethode der Schichten ist einfach, kostengünstig und umweltschonend.

Vorzugsweise wird immer zuerst eine Formulierung ohne Schaumkomponente angemischt und unter Zugabe von Wasser zu einem Slurry angerührt und dann in einer zweiten Mischstufe die Schaumkomponente eingemischt.

Vorzugsweise wird die Formulierung für beiden Schichten in einem gemeinsamen Mischvorgang hergestellt und zu einem gemeinsamen Slurry angerührt. Nachfolgend werden in zwei parallel zueinander stattfindenden Mischstufen jeweils Teilmengen des Slurries für die Bildung unterschiedlicher Schichten der Mehrschichtplatte unterschiedliche Anteile Schaumkomponente beigemischt.

Über die Formulierung ist weiters anzuführen, dass der Anteil des Sulfat-Aluminat-Zements an der Formulierung vorzugsweise zumindest 60 Gewichtsteile, insbesondere zumindest 70 Gewichtsteile, beträgt. Dadurch werden die die mechanischen Eigenschaften und die Dämmeigenschaften der fertigen Mehrschichtplatte günstig beeinflusst.

Vorzugsweise ist die Sulfatkomponente aus einer Gruppe, umfassend Kalziumsulfat, α-oder β- Halbhydrat oder Dihydrat von Calziumsulfat, Anhydrit, Natriumsulfat, Eisen-(II)-sulfat, Magnesiumsulfat sowie Mischungen und Derivate daraus, ausgewählt. Es werden damit Hydratphasen während der Erhärtung Mehrschichtplatte erzeugt, die im Laufe der Zeit einer Phasenumwandlung unterliegen, wobei die Festigkeit zunimmt.

Die Aluminiumkomponente ist bevorzugt aus einer Gruppe, umfassend Aluminiumoxid (Al₂O₃), Aluminiumhydroxide, Aluminiumsilikate, Aluminate sowie Mischungen und Derivate daraus, ausgewählt. Es kann damit das Erstarrungsverhalten und die Abbindezeit der Mehrschichtplatte positiv beeinflusst werden.

Das Verhältnis der Sulfatkomponente zur Aluminiumkomponente kann gemäß einer Ausführungsvariante ausgewählt sein aus einem Bereich mit einer unteren Grenze von 4 : 10 und einer oberen Grenze von 20 : 30. Es wird damit erreicht, dass die Abbindezeit des Slurry und die Gefahr, dass der zugegebene Schaum zusammenfällt und damit die Porosität der Dämmstoffschicht verringert wird, reduziert werden. Es wird also durch das Einhalten des Verhältnisses der beiden Komponenten in diesem Bereich die Verarbeitung vereinfacht.

Insbesondere kann zur weiteren Verbesserung dieses Verhaltens das Verhältnis der Sulfatkomponente zur Aluminiumkomponente ausgewählt sein aus einem Bereich mit einer unteren Grenze von 6 : 12 und einer oberen Grenze von 13 : 22, vorzugsweise aus einem Bereich mit einer unteren Grenze von 10 : 18 und einer oberen Grenze von 12 : 24.

Zur Verbesserung der mechanischen Eigenschaften der Dämmstoffschicht kann die Formulierung zusätzlich SiO2-Partikel in einem Anteil von maximal 10 Gewichtsteilen enthalten. Vorzugsweise beträgt der Anteil an SiO2-Partikel jedoch maximal 7,5 Gewichtsteile, insbesondere maximal 7,5 Gewichtsteile.

Gemäß einer anderen Ausführungsvariante enthält die Formulierung spezielle SiO2 - Partikel in Form von so genanntem Silica fumed. Es handelt sich hierbei um ein reaktives SiO2, durch das das Brandbeständigkeitsverhalten der Mehrschichtplatte verbessert werden kann, indem durch Verbrauch von Energie für Reaktionen das SiO2 eine "kühlende" Wirkung hat. Insbesondere werden dabei kohlenstofffreie SiO2-Partikel mit einem Reinheitsgrad von mindestens 97 % verwendet.

In einer Ausführungsvariante dazu ist vorgesehen, dass die SiO2-Partikel eine BET-Oberfläche zwischen 5 m²/g und 35 m²/g aufweisen, um damit die Reaktivität zu erhöhen. Vorzugsweise weisen die SiO2-Partikel eine BET-Oberfläche zwischen 10 m²/g und 25 m²/g auf, insbesondere zwischen 16 m²/g und 20 m²/g. Bevorzugt weisen die SiO2-Partikel eine Partikelgröße von maximal 45 µm auf, wobei insbesondere der Anteil des Grobkorns auf maximal 2 % beschränkt ist und der Rest der SiO2-Partikel eine Partikelgröße von maximal 1 µm, vorzugsweise maximal 0,3 µm, aufweisen.

Die Formulierung kann weiters zumindest einen so genannten Hochleistungsverflüssiger enthalten um das rheologische Verhalten des aus der Formulierung gebildeten Slurry zu beeinflussen, sofern die Zugabe von Silica fumed, das ebenfalls eine verflüssigende Wirkung aufgrund der kugelförmigen Gestalt der Partikel aufweist, nicht allein für diesen Zweck ausreichend ist, wobei der Anteil auf maximal 3 Gewichtsprozente beschränkt ist. Insbesondere wenn Silica fumed in der Formulierung enthalten ist, wird der Anteil des Hochleistungsverflüssigers auf maximal 0,5 Gewichtsprozente, vorzugsweise maximal 0,3 Gewichtsprozente, beschränkt.

Vorzugsweise ist der Hochleistungsverflüssiger ein Polycarboxylatether bzw. ein Derivat hiervon, um damit den Wasseranteil des Slurry reduzieren zu können, sodass weniger Wasser für das Abbinden zur Verfügung steht und damit die gewünschten Phasen sicherer entstehen.

Es ist weiters möglich, dass der Formulierung zur Stabilisierung des Slurry und damit zur besseren Verarbeitbarkeit des Slurry zumindest ein Verdicker in einem Anteil von maximal 0,5 Gewichtsprozenten zugesetzt wird. Vorzugsweise ist der Verdicker in einem Anteil von maximal 0,25 Gewichtsprozenten, insbesondere maximal 0,02 Gewichtsprozenten, zugesetzt. Bevorzugt ist der Verdicker ausgewählt aus einer Gruppe umfassend Hydroxymethylpropylcellulose, Methylhydroxyethylcellulose sowie Mischungen und Derivate daraus, da damit im Rahmen der durchgeführten Tests für die Erfindung gefunden wurde, dass diese Verdicker in Hinblick auf Verarbeitung bessere Eigenschaften, wie z.B. die Rheologie, die Dispergierung der Feststoffe, oder den Wasserbedarf und das Wasserrückhaltevermögen aufwiesen. In Hinblick auf die Verarbeitbarkeit des Slurry wurde auch gefunden, dass Verbesserungen eintreten, wenn der Anteil des Verdickers maximal 70 % des Anteils des Hochleistungsverflüssigers beträgt.

Es ist weiters möglich, dass der Formulierung Fasern in einem Anteil von maximal 3 Gewichtsprozenten, insbesondere maximal 1 Gewichtsprozenten, vorzugsweise 0,3 Gewichtsprozenten, zugesetzt werden, um die Biegezugfestigkeit der Mehrschichtplatte zu verbessern. Es kann damit aber auch die Schaumkomponente stabilisiert werden. Zudem können z.B. Zellulosefasern Wasser speichern, welches im Abbindeprozeß benötigt wird, wobei dieses physikalisch "gebundene" Wasser hinsichtlich der Erhärtung des Mineralschaums besser beherrschbar ist.

Cellulosefasern können auch als Verdicker eingesetzt werden.

Vorzugsweise weisen die Fasern eine Länge von maximal 50 mm, insbesondere maximal 30 mm, auf und sind insbesondere ausgewählt aus einer Gruppe umfassend Zellulosefasern, Basaltfasern, Glasfasern, insbesondere alkaliresistente Glasfasern, Polypropylenfasern, sowie Mischungen daraus.

Fasern größerer Länge, also beispielsweise mit einer Länge zwischen 3 mm und 50 mm, insbesondere zwischen 3 mm und 30 mm, vorzugsweise zwischen 3 mm und 12 mm, wobei deren Durchmesser vorzugsweise zwischen 13 µm und 25 µm, vorzugsweise zwischen 13 µm und 18 µm beträgt, werden vornehmlich dann zugegeben, wenn die Biegezugfestigkeit erhöht werden soll.

Fasern bis zu einer Länge von 0,1 mm, vorzugsweise bis zu 30 µm, und insbesondere einem Durchmesser von bis zu 2 µm, vorzugsweise bis zu 1,5 µm, werden hingegen bevorzugt aus rheologischen Gründen zugesetzt.

Der Formulierung kann zur Verbesserung der Rheologie zumindest eine Verarbeitungshilfe aus einer Gruppe umfassend ein Alkalikarbonate, Alkalisulfate, Fruchtsäuren zugesetzt sein, beispielsweise als Verzögerer.

Um den Anteil an Sorptionsfeuchte in der fertigen Dämmstoffschicht zur reduzieren und damit die Wärmedämmung (λ-Wert) zu verbessern, kann vorgesehen werden, dass zumindest ein Hydrophobierungsmittel zugesetzt wird, insbesondere zur Massehydrophobierung der Formulierung. Der Anteil des Hydrophobierungsmittels an der Formulierung kann dabei bis zu 3 Gewichtsprozente, vorzugsweise bis zu 1 Gewichtsprozent, betragen.

Gemäß einer anderen Ausführungsvariante der Formulierung kann vorgesehen sein, dass diese zuschlagstofffrei, d.h. füllstofffrei ist, also keine nichtreaktiven Bestandteile enthält, wodurch das Raumgewicht der Mehrschichtplatte weiter gesenkt werden kann.

Vorzugsweise ist die Schaumkomponente durch einen Proteinschaum und/oder einen Tensidschaum gebildet. Damit kann das Schäumungsverhalten besser kontrolliert werden als bei der Methode des direkten Aufschäumens mittels eines Treibmittels. Insbesondere die Porengröße und die Porenverteilung kann damit besser reproduzierbar und in einem weiteren Bereich beeinflusst werden. Damit kann der Wärmeleitwert bzw. das Schallabsorptionsvermögen der Mehrschichtplatte besser eingestellt werden.

Der Anteil der Schaumkomponente pro m³ Slurry beträgt zwischen 30 kg/m³ und 70 kg/m³, insbesondere zwischen 40 kg/m³ und 60 kg/m³ für die porösere Schicht. In diesem Bereich ist besonders gutes Wärmedämmverhalten erreichbar. Vorzugsweise wird für die weniger poröse Schicht der Mehrschichtplatte nur 30% bis 50% jener Menge Schaumkomponente zugesetzt, welche für die stärker poröse Schicht zugesetzt wird.

Zur Stabilisierung des Schaums während des Einmischens in den Slurry aus der Formulierung mit Wasser kann der Schaumkomponente ein Tensid zugesetzt werden.

Gemäß einer bevorzugten Ausführungsvariante weist die porösere Schicht der Mehrschichtplatte einen Porenanteil von zumindest 70 %, insbesondere zwischen 80 % und 95 % auf. Dieser hohe Porenanteil bewirkt geringes Raumgewicht und hohe spezifische Wärmedämmung. Dabei weisen die Poren vorzugsweise einen Durchmesser von maximal 0,5 mm, insbesondere maximal 0,25 mm bzw. maximal 0,1 mm, auf, um einerseits ein positives Dämmverhalten zu erreichen und um andererseits die mechanische Stabilität der fertigen Dämmstoffschicht zu verbessern.

Es können der Schaumkomponente auch Luftporenbilder, wie z.B. Alkylpolyglykolether, Alkylsulfate oder -sulfonate, zugesetzt werden, u.a. um die Stabilität des Schaums zu verbessern.

Gemäß einer Ausführungsvariante des Verfahrens ist vorgesehen, dass die Schaumkomponente vor dem Zusetzen zu dem Slurry in einem Schaumgenerator mit Wasser und gegebenenfalls Verarbeitungshilfsstoffen versetzt wird, wodurch deren Verarbeitbarkeit, insbesondere die Stabilität des Schaums während des Vermischens mit dem Slurry, verbessert werden kann. Es kann dazu in der Vorrichtung zur Aufschäumung der Schaumkomponente ein Schaumgenerator angeordnet sein, in dem ein mit Wasser versetztes Protein mit einem Gas, insbesondere Luft, aufgeschäumt wird.

Die Erfindung wird an Hand einer Zeichnung veranschaulicht:

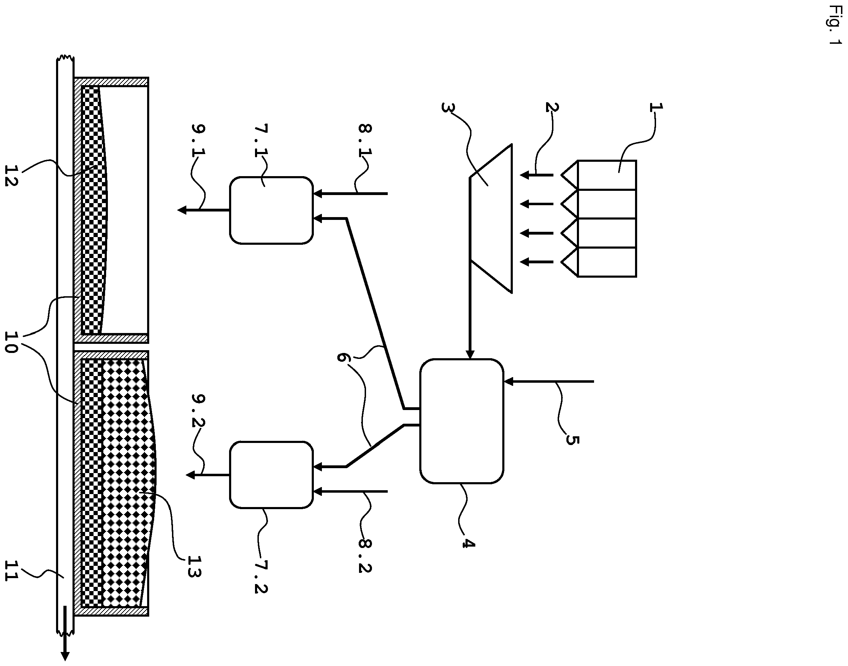

- Fig. 1: zeigt schematisch den Materialfluss bei einem beispielhaften erfindungsgemäßen Herstellungsvorgang einer erfindungsgemäßen Mehrschichtplatte.

Aus Vorratsbehältern 1 kommen die Bestandteile 2 der Formulierung über eine Dosierund Messvorrichtung 3 in eine erste Mischstufe 4, in die auch Wasser 5 zugesetzt wird.

In dieser Mischstufe 4 wird Slurry 6 gebildet, von dem eine erste Teilmenge in einen weiteren Mischer 7.1 gefördert wird und eine zweite Teilmenge in einen weiteren Mischer 7.2. In beide Mischer 7.1, 7.2 wird zusätzlich eine Schaumkomponente 8.1, 8.2 zugeführt.

Im Verhältnis zur Menge des dort zugeführten Slurry 6 ist die Menge Schaumkomponente 8.2 im Mischer 7.2 etwa 2,5-fach höher als die Menge Schaumkomponente im Mischer 7.1. Beide Mischer 7.1, 7.2 mischen Schaumkomponente und Slurry zu einer vergießfähigen, selbstaushärtenden, schaumigen Masse 9.1 bzw. 9.2.

Aus dem Mischer 7.1 wird die Masse 9.1 auf den Grund einer Schalung 10 gegossen, die die Form einer oben offenen prismatischen Schachtel hat und mit der Masse 9,1 teilbefüllt wird.

Dann wird die teilbefüllte Schalung 10 zum Auslass aus dem Mischer 7.2 bewegt, im dargestellten Beispiel, indem sie auf einer bewegten Fläche 11 angeordnet ist.

Die in der Schalung 10 aus Masse 9.1 gebildete Schicht 12 wird plan gestrichen, sodass sie im Wesentlichen konstante Dicke aufweist. Vorzugsweise erfolgt dieses Planstreichen mit Hilfe einer Zahnspachtel, sodass also die in der Schalung 10 oben liegende Oberfläche der Schicht 12 eine Rillung aufweist.

Im nächsten Schritt wird Masse 9.2 aus dem Mischer 7.2 auf die Schicht 12 in der Schalung 10 gegossen, sodass sie eine auf der Schicht 12 aufliegende Schicht 13 bildet. Die Schicht 13 wird auch plan gestrichen, im Normalfall mit einer Spachtel oder Latte mit glatter Streichkante.

Nun werden die Schichten 12, 13 in der Form 10 zumindest so lange ruhen gelassen, bis sie ausreichend ausgehärtet sind um ausgeformt werden zu können ohne ihre Gestalt zu verlieren. Schließlich wird ausgeformt. Die Schichten 12 und 13 sind ohne Erfordernis irgendeiner weiteren Maßnahme stoffschlüssig miteinander fest verbunden.

Die Geschwindigkeit der Aushärtung ist von der genauen Zusammensetzung der Schichten 12, 13 abhängig. Insbesondere durch den Anteil an Fruchtsäure, beispielsweise Zitronensäure, kann die Aushärtegeschwindigkeit beeinflusst werden. Grünstandfest sind die Schichten typischerweise nach fünf bis zehn Minuten; die Mantelfläche der Schalung 10 kann also schon nach dieser Zeit entfernt werden. 80 Prozent der Endfestigkeit der Schichten sind typischerweise nach wenigen Stunden erreicht.

Ausgehend von dem beschriebenen Prinzip der Herstellung liegt es im Bereich fachmännischen Handels einzelne Arbeitsschritte des Herstellungsverfahrens oder auch den ganzen Verfahrensablauf zu automatisieren. Deshalb wird hier auf das Thema "Automatisierung des Herstellungsverfahrens" nicht weiter eingegangen.

Da die Grünstandsfestigkeit bei der Aushärtung der Schichten 12, 13 in recht kurzer Zeit erreichbar ist, ist es auch gut möglich, anstatt, wie beschrieben, diskontinuierlich Mehrschichtplatten zu fertigen, kontinuierlich oder quasikontinuierlich zu fertigen. Dazu kann in eine in ihrer Längsrichtung, beispielsweise auf einem Förderband bewegte Rinne, deren Seitenwände durch Schalungsplatten gebildet sind, an hintereinander angefahrenen Orten beziehungsweise Wegstrecken Masse 9.1 eingegossen werden, plan gestrichen werden, dann Masse 9.2 eingegossen werden, dann plan gestrichen werden und dann beide Massen aushärten gelassen werden. In einem in Bewegungsrichtung der Rinne von den Eingießstellen entfernt liegenden Längsbereich sind die Massen ausgehärtet, es können dort die seitlichen Schalungsplatten entfernt werden und von dem entstandenen Verbundprofil können Mehrschichtplatten abgeschnitten werden.

Natürlich ist es nicht zwangsweise erforderlich, die Schichten 12, 13 planparallel auszuführen. Beispielsweise kann man auch die untere Schicht 12 vor dem Aushärten durch einen entsprechend geformten Stempelteil zu einer Wanne formen und die obere Schicht darauf gießen. Der aus der unteren Schicht 12 entstehende festere Teil der Mehrschichtplatte wirkt dann noch stärker wie eine schützende Schale für den mechanisch weniger festen Teil, als er dies bei planparalleler Form tut.

Ebenso kann man die Stirnseiten der Mehrschichtplatte mit Nuten und Vorsprüngen gießen, sodass beispielsweise Nut-Feder-Verbindungen zwischen zwei Mehrschichtplatten ermöglicht werden.

Durch die Erfindung wird in wirtschaftlich und technisch vorteilhaftester Weise die Variabilität der Materialeigenschaften "mechanische Festigkeit" und "Wärmedämmfähigkeit" eines mineralischen, aus einer selbstaushärtenden Formulierung herstellbaren Stoffes dazu ausgenutzt, Platten auf mineralischer Basis zu erzeugen, die sowohl den für Wärmedämmung in Gebäuden erforderlichen hohen Wärmedämmwert pro Fläche aufweisen, als auch ausreichend mechanisch fest sind, sodass sie keine separate, mechanische Schutzschicht erfordern.

Unter Ausnutzung des Rahmens der beschriebenen Formulierung können erfindungsgemäß Mehrschichtplatten hergestellt werden bei denen die stärker porige Schicht eine geringere Dichte als 300 kg/m³, beispielsweise 210 kg/m³, aufweist und einen niedrigeren Wärmeleitwert als 0,05 W/mK hat. Die mechanisch festere Schicht kann dabei etwa so fest sein ist wie eine übliche Putzschicht an Gebäudewänden. Es kann aber durchaus vorteilhaft sein, sie mit geringerer Druckfestigkeit als eine übliche Putzschicht und dafür mit höherer Dicke auszubilden.

Bei der Anwendung als Wärmeisolierung für Gebäudewände und Gebäudedecken gelangen die mechanisch empfindliche, gut dämmende Dämmstoffschicht und die mechanisch robuste, weniger gut wärmedämmende Schutzschicht als Mehrschichtplatte schon gemeinsam als monolithischer und damit gut handhabbarer Verbundkörper auf den Einsatzort. Die Verbindung der einzelnen Teilschichten ist dabei mit keinerlei Nachteilen wie Verlust von Diffusionsoffenheit, Erfordernis von Klebstoff etc. verbunden.

## Patentansprüche

1. Mehrschichtplatte als Verbundplatte aus zwei unmittelbar aneinander stoffschlüssig haftenden mineralischen Schichten (12, 13), wobei beide Schichten (12, 13) aus einer selbstaushärtenden Formulierung umfassend ein hydraulisch abbindendes Bindemittel und ein Sulfat gebildet sind, wobei eine Schicht (13) bezogen auf die zweite Schicht (12) eine höhere Porosität aufweist,
**dadurch gekennzeichnet, dass**
- das hydraulisch abbindende Bindemittel aus Sulfat-Aluminat-Zement gebildet ist, wobei der Sulfat-Aluminat-Zement in der Formulierung mit zumindest 60 Gewichtsprozenten insbesondere zumindest 70 Gewichtsprozent enthalten ist,
- puzzolanisch abbindendes Bindemittel in Form von SiO₂-Partikeln mit maximal 10 Gewichtsprozent in der Formulierung enthalten ist,
- der Formulierung für die Schicht (13) mit höherer Porosität eine Schaumkomponente zugefügt ist, wobei der Anteil der Schaumkomponente pro m³ Formulierung zwischen 30 kg/m³ und 70 kg/m³, insbesondere zwischen 40 kg/m³ und 60 kg/m³ beträgt,
- die Formulierung für die Schicht (12) mit niedrigerer Porosität nicht geschäumt ist, oder jener selbstaushärtenden Formulierung, durch welche die Schicht (12) mit niedrigerer Porosität gebildet ist, pro Menge Formulierung 30 bis 50 Prozent jener Menge Schaumkomponente zugefügt sind, welche der Formulierung für die Schicht (13) mit höherer Porosität pro Menge Formulierung zugefügt ist.

2. Mehrschichtplatte nach Anspruch 1, **dadurch gekennzeichnet, dass** jener selbstaushärtenden Formulierung durch welche jene Schicht (12) der Mehrschichtplatte gebildet ist, die geringere Porosität aufweist, pro Menge Formulierung 30 bis 50 Prozent jener Menge Schaumkomponente zugefügt ist, welche der Formulierung für die Schicht (13) mit höherer Porosität pro Menge Formulierung zugefügt ist.

3. Mehrschichtplatte nach Anspruch 1 oder 2, **dadurch gekennzeichnet, dass** die Schaumkomponente ein Proteinschaum und/oder einen Tensidschaum ist.

4. Mehrschichtplatte nach einem der Ansprüche 1 bis 3, **dadurch gekennzeichnet, dass** jene Schicht (13) mit höherer Porosität eine Dichte von unter 300kg/m³ aufweist.

5. Verfahren zur Herstellung eine Mehrschichtplatte gemäß einem der Ansprüche 1 bis 4, **dadurch gekennzeichnet, dass** die Formulierungen für die zwei Schichten (12, 13) durch Zugabe mit Wasser zu zwei fließfähigen, selbstaushärtenden Slurries angerührt werden, wobei zumindest einem Slurry eine Schaumkomponente zugesetzt wird und diese beiden fließfähigen Slurries zeitlich hintereinander und örtlich übereinander in die gleiche Form (10) gegossen werden und darin aushärten.

6. Verfahren nach Anspruch 5, **gekennzeichnet durch** die Schritte:
- aus einer Formulierung wird in einer ersten Mischstufe (4) durch Zugabe von Wasser ein fließfähiger, selbstaushärtender Slurry angerührt,
- der Slurry wird auf zwei Teilmengen aufgeteilt, wobei die erste Teilmenge im Mischer (7.2) mit der Schaumkomponente versetzt und zu einer Masse (9.2) aufgeschäumt wird,
- die zweite Teilmenge des Slurrys wird in eine Form (10) gegossen,
- die Masse (9.2) wird örtlich über die zweite Teilmenge in dieselbe Form (10) gegossen.

7. Verfahren nach Anspruch 6, **dadurch gekennzeichnet, dass** die zweite Teilmenge, bevor sie in die Form (10) gegossen wird, im Mischer (7.1) mit einer Schaumkomponente versetzt und aufgeschäumt wird, wobei die Menge der Schaumkomponente 30 bis 50 Prozent jener Menge Schaumkomponente beträgt, welche der ersten Teilmenge im Mischer (7.2) zugefügt wird.

8. Verfahren zur Herstellung eine Mehrschichtplatte nach einem der Ansprüche 5 bis 7, **dadurch gekennzeichnet, dass** die Masse (9.2) in die Form (10) gegossen wird, solange die zweite Teilmenge noch fließfähig ist.

## Claims

1. Multilayer plate as a composite plate consisting of two mineral layers (12, 13) which are integrally bonded directly to one another, the two layers (12, 13) being made of a self-curing formulation comprising a hydraulically setting binder and a sulfate, one layer (13) having a higher porosity than the second layer (12),
**characterized in that**
- the hydraulically setting binder is made of sulfate aluminate cement, the sulfate aluminate cement being contained in the formulation in an amount of at least 60 wt.%, in particular at least 70 wt.%,
- a pozzolanically setting binder is contained in the formulation in the form of SiO₂ particles in an amount of at most 10 wt.%,
- a foam component is added to the formulation for the layer (13) having higher porosity, the amount of the foam component per m³ formulation being between 30 kg/m³ and 70 kg/m³, in particular between 40 kg/m³ and 60 kg/m³,
- the formulation for the layer (12) having lower porosity is not foamed, or a foam component is added per quantity of formulation to the self-curing formulation for the layer (12) having lower porosity, which foam component is added in an amount of 30 to 50% of the quantity of foam component which is added per quantity of formulation to the formulation for the layer (13) having higher porosity.

2. Multilayer plate according to claim 1, **characterized in that** the quantity of foam component which is added to the formulation for the layer (13) having higher porosity per quantity of formulation is added, in an amount of 30 to 50% per quantity of formulation, to the self-curing formulation which forms the layer (12) of the multilayer plate having lower porosity.

3. Multilayer plate according to claim 1 or claim 2, **characterized in that** the foam component is a protein foam and/or a surfactant foam.

4. Multilayer plate according to any of claims 1 to 3, **characterized in that** the layer (13) having higher porosity has a density of less than 300 kg/m³.

5. Method for producing a multilayer plate according to any of claims 1 to 4, **characterized in that** the formulations for the two layers (12, 13) are mixed by adding water to form two flowable, self-curing slurries, a foam component being added to at least one slurry and these two flowable slurries being poured temporally successively and spatially one on top of the other into the same mold (10) and curing therein.

6. Method according to claim 5, **characterized by** the following steps:
- a flowable, self-curing slurry is mixed from a formulation in a first mixing stage (4) by adding water,
- the slurry is divided into two portions, the first portion being mixed with the foam component in the mixer (7.2) and foamed to form a compound (9.2),
- the second portion of the slurry is poured into a mold (10),
- the compound (9.2) is poured into the same mold (10) spatially on top of the second portion.

7. Method according to claim 6, **characterized in that** the second portion, before it is poured into the mold (10), is mixed with a foam component in the mixer (7.1) and foamed, the quantity of the foam component being 30 to 50% of the quantity of foam component which is added to the first portion in the mixer (7.2).

8. Method for producing a multilayer plate according to any of claims 5 to 7, **characterized in that** the compound (9.2) is poured into the mold (10) while the second portion is still flowable.

## Revendications

1. Panneau multicouche comme panneau composite comprenant deux couches minérales (12, 13) qui adhèrent directement l'une à l'autre de manière à s'accrocher à la matière, les deux couches (12, 13) étant formées d'une formulation auto-polymérisable comprenant un liant à prise hydraulique et un sulfate, une couche (13) ayant une porosité supérieure à celle de la seconde couche (12),
**caractérisé en ce que**
- le liant à prise hydraulique est formé à partir d'un ciment sulfate-aluminate, le ciment sulfate-aluminate étant contenu dans la formulation ayant au moins 60 % en poids, en particulier au moins 70 % en poids,
- le liant pouzzolanique sous forme de particules de SiO₂ ayant un maximum de 10 % en poids dans la formulation,
- un composant mousse est ajouté à la formulation de la couche (13) ayant une porosité plus élevée, la proportion du composant mousse par m³ de formulation étant comprise entre 30 kg/m³ et 70 kg/m³, en particulier entre 40 kg/m³ et 60 kg/m³,
- la formulation de la couche (12) ayant une porosité inférieure n'est pas expansée, ou cette formulation auto-polymérisable par laquelle la couche (12) ayant une porosité inférieure est formée, 30 à 50 % par quantité de formulation de cette quantité de composant mousse sont ajoutés à la formulation de la couche (13) ayant une porosité supérieure par quantité de formulation.

2. Panneau multicouche selon la revendication 1, **caractérisé en ce que** 30 à 50 % par quantité de formulation du composant mousse ajoutée à la formulation auto-polymérisable qui constitue la couche (12) du panneau multicouche ayant une porosité inférieure est ajoutée à cette quantité de formulation de la couche (13) ayant une porosité supérieure par quantité de formulation.

3. Panneau multicouche selon la revendication 1 ou 2, **caractérisée en ce que** le composant mousse est une mousse protéique et/ou une mousse tensioactive.

4. Panneau multicouche selon l'une quelconque des revendications 1 à 3, **caractérisé en ce que** ladite couche (13) ayant une porosité supérieure a une densité inférieure à 300 kg/m³.

5. Procédé de fabrication d'un panneau multicouche selon l'une des revendications 1 à 4, **caractérisé en ce que** les formulations des deux couches (12, 13) sont mélangées par addition d'eau à deux suspensions fluides et auto-polymérisables, un composant mousse étant ajouté à au moins une suspension et ces deux suspensions fluides étant versées dans le même moule (10) l'une après l'autre et localement l'une sur l'autre et durcies dans ce dernier.

6. Procédé selon la revendication 5, **caractérisé par** les étapes suivantes :
- à partir d'une formulation, une suspension fluide et auto-polymérisable est mélangée dans une première étape de mélange (4) par addition d'eau,
- la suspension est divisée en deux quantités partielles, la première quantité partielle étant mélangée avec le composant mousse dans le mélangeur (7.2) et moussée en une masse (9.2),
- la seconde partie de la suspension est versée dans un moule (10),
- la masse (9.2) est versée localement dans le même moule (10) sur la seconde quantité partielle.

7. Procédé selon la revendication 6, **caractérisé en ce que** la seconde quantité partielle, avant d'être versée dans le moule (10), est mélangée avec un composant mousse dans le mélangeur (7.1) et moussée, la quantité de composant mousse étant de 30 à 50 % de cette quantité de composant mousse qui est ajoutée à la première quantité partielle dans le mélangeur (7.2).

8. Procédé de fabrication d'un panneau multicouche selon l'une des revendications 5 à 7, **caractérisé en ce que** l'on verse la masse (9.2) dans le moule (10) tant que la seconde quantité partielle est encore fluide.
